# EUROPÄISCHE PATENTSCHRIFT

(11) **EP 1 827 671 B1**
(45) Veröffentlichungstag und Bekanntmachung des Hinweises auf die Patenterteilung: **04.06.2008**
(21) Anmeldenummer: 05791115.8
(22) Anmeldetag: 23.09.2005
(51) Int. Cl.: B01J 8/00, B01J 8/18, B01J 8/24, B01J 2/16

(54) **APPARATUR ZUR BEHANDLUNG VON PARTIKELFÖRMIGEM GUT**
APPARATUS FOR TREATING A PARTICULATE MATERIAL
APPAREILLAGE POUR TRAITER UNE MATIERE SOUS FORME DE PARTICULES

(30) Priorität: 08.10.2004 WO PCT/EP2004/011232; 28.02.2005 DE 202005003791 U
(43) Veröffentlichungstag der Anmeldung: 05.09.2007
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Weller, Wolfgang
(86) Internationale Anmeldenummer: PCT/EP2005/010299
(87) Internationale Veröffentlichungsnummer: WO 2006/039988

(56) Entgegenhaltungen:
- EP-A- 0 103 940
- GB-A- 2 003 396
- US-A- 4 145 818
- US-A- 4 656 056
- US-A- 5 866 737

## Beschreibung

Die Erfindung betrifft eine Apparatur zur Behandlung von partikelförmigem Gut, mit einer Prozesskammer zum Aufnehmen und Behandeln des Gutes, die einen mit Durchtrittsöffnungen versehenen Boden aufweist, durch die Prozessluft in die Prozesskammer einführbar ist, und mit einem Auslass zum Abführen von Prozessluft von der Prozesskammer.

Eine derartige Apparatur ist beispielsweise aus der DE 100 54 557 A1 bekannt.

Diese Apparaturen dienen insbesondere dazu, um ein partikelförmiges Gut zu granulieren oder zu coaten. Ein gasförmiges Medium, sogenannte Prozessluft, wird über den Boden in die Prozesskammer eingeführt und tritt dabei durch die zahlreichen Öffnungen, meist in Form von Schlitzen zwischen sich überlappenden Leitplatten etwa horizontal gerichtet in die Prozesskammer ein.

Dabei ist bekannt geworden, den Boden unterschiedlich auszugestalten, wie das beispielsweise aus der DE 199 04 147 A1, der DE 102 02 582 C1 oder der DE 102 48 116 B3 bekannt ist. Das zu behandelnde Gut wird durch die Prozessluft verwirbelt, wobei die Wirbelcharakteristik jeweils von der Gestaltung des Bodens abhängig ist. Wird beispielsweise der Prozessluft noch eine gewisse umfängliche Komponente auferlegt, bildet sich nach und nach ein toroidal umlaufender Wirbelstromring aus.

Sollen aus staubfeinem Pulver größere Agglomerate gebildet werden, also soll das Gut granuliert werden, wird dem toroidalen Ring über Düsen ein klebriges Medium zugeführt. Bei der DE 102 48 116 C1 sind es beispielsweise in der Wand des Behälters, der die Prozesskammer umschließt, eingesteckte schräg nach oben gerichtete Sprühdüsen. Beim Coaten soll einem bereits vorhandenen größeren Körper möglichst gleichmäßig eine Überzugsschicht aufgebracht, also aufgesprayt werden.

Die von der Prozessluft verwirbelten Gutteilchen fallen aufgrund der Schwerkraft wieder auf den Boden herab, trennen sich also von der Prozessluft, die am oberen Abströmende über einen Auslass aus der Prozesskammer abströmt.

Die Prozessluft wird über einen Einlass in einer unter dem Boden angeordneten Anströmkammer eingeführt und dringt dann durch die zahlreichen Öffnungen durch den Boden in die Prozesskammer ein.

Nach Verlassen der Prozesskammer, ggf. nach Durchströmen von am oberen Ende der Prozesskammer angeordneten Filtern, wird die Prozessluft aus der Apparatur abgeführt und aufgearbeitet.

Bei herkömmlichen Apparaturen sind separate sogenannte Monobloc-Einheiten vorgesehen, die in Räumen abseits der Apparatur, meist daneben oder darüber, angeordnet sind und über Rohrleitungssysteme mit der Apparatur verbunden sind.

Man spricht in solchen Fällen von Zuluft-Monobloc-Einheiten, die für die Konditionierung der Prozessluft verantwortlich sind und von Abluft-Monobloc-Einheiten, die für die umweltgerechte Entsorgung der Prozessabluft sorgen. Die zugeführte Prozessluft wird entsprechend erwärmt und auf einen bestimmten Trocknungs-/Feuchtigkeitsgehalt gebracht sowie in ein zur Prozessführung geeignetes Durchströmmaß bewegt.

Je nach Art der Behandlung des Gutes muss der abgeführten Prozessluft Feuchtigkeit, insbesondere Lösemittel, entzogen werden.

Die bekannte Art des Zusammenspiels zwischen der eigentlichen Apparatur, also der Wirbelschicht-Granulier- und Coatinganlage (auch WSG genannt) und den notwendigen Zuluft-Monobloc- und Abluft-Monobloc-Einheiten benötigt viel Platz und Raum. Dabei entstehen oftmals lange Luftwege über Versorgungsrohre und daraus resultierend große Innenoberflächen, die von Fall zu Fall zu reinigen oder sonst wie zu warten sind.

Da sich solche Apparaturen verbreitet in der pharmazeutischen Industrie im Einsatz finden, sind diese Leitungen aus hochwertigen metallischen Materialien hergestellt, die eine relativ große metallische Masse darstellen, die einer schnellen Veränderung von Prozesslufttemperaturen entgegenstehen, da diese große Masse ein träges System darstellt.

Luftführende Rohrleitungen sind nur selten an ihrer Innenoberfläche gut einsehbar, so dass deren Reinigung nur mit technisch aufwändigen integrierten Reinigungssystemen beherrschbar sind. Man spricht dabei von "Cleaning in place" oder "Washing in place"-Einrichtungen.

Zerklüftete Anlagesysteme erfordern auch relativ große Aufwendungen zur Schall- und Wärmeisolierung, woraus erhebliche Kosten für die Errichtung und den Betrieb einer derartigen Apparatur resultieren.

Aus der US 4,557,904 ist ein Reaktor zur Durchführung von exothermen chemischen Reaktionen bekannt, in dem ein fluidisierendes Medium dazu verwandt wird, um die Reaktionswärme abzuführen. In der Apparatur ist zur Abkühlung und Aufnahme der exothermen Reaktionswärme ein Kühler angeordnet.

Aus der EP 0 282 777 A ist eine Apparatur zur Verbrennung von kohlenstoffhaltigem Material in einer Wirbelschichtanlage bekannt, in deren Prozesskammer ein Wärmetauscher angeordnet ist der zum Kühlen und/oder Erwärmen der Gase dient.

Aus der DE 41 41 227 A1 ist ein unter Druck betriebener Wirbelschichtreaktor bekannt, um dessen zentralen Reaktionsraum herum mehrere Gruppen von Filter angeordnet sind, um Feststoffe auszufiltern.

Es ist Aufgabe der vorliegenden Erfindung, eine Apparatur der eingangs genannten Art dahingehend zu verbessern, dass eine kosteneffektive Prozessführung möglich ist.

Erfindungsgemäß wird die Aufgabe dadurch gelöst, dass in die Apparatur eine Vorrichtung zur Konditionierung der Prozessluft und zur Umwälzung der Prozessluft im Kreislauf integriert ist, wobei die Vorrichtung zur Konditionierung zumindest einen Kondenser und einen Lufterhitzer aufweist, und dass eine Filteranordnung vorgesehen ist, um Feststoffe aus der von der Prozesskammer abströmenden Prozessluft zu entfernen, wobei Filter der Filteranordnung strömungstechnisch vor der Vorrichtung zum Konditionieren der Prozessluft angeordnet sind.

Durch diese Maßnahme wird sich nun von dem etablierten Prinzip der entfernt von der Apparatur vorhandenen Monoblocbauweise gelöst und wesentliche Behandlungen der Prozessluft direkt in der Apparatur durchgeführt, nämlich die Konditionierung der Prozessluft und die Umwälzung in der Apparatur im Kreislauf.

Durch diese kompakte Bauweise im Sinne einer Integration der notwendigen Bauelemente in die Apparatur resultiert ein geringer Platz- und Raumbedarf. Zugleich sind geringere Massen an Bauelementen notwendig, was gleichbedeutend mit schnelleren Temperatur- und Regelgeschwindigkeiten ist.

Die kompakte Bauweise führt auch zu geringeren Schall- und Wärmeemissionen. Es sind weniger Oberflächen vorhanden, die mit der Prozessluft in Berührung treten, somit sind auch die zu reinigenden Flächen wesentlich geringer. Insgesamt resultieren geringere Kosten für die Gesamtanlage und auch ein geringerer Energiebedarf aufgrund von wesentlich geringeren Energieverlusten.

uie von der Prozesskammer abströmende Prozessluft enthält meist Lösemittel des Behandlungsmediums, das in der Prozesskammer auf das Gut aufgebracht wird, insbesondere Wasser und organische Lösemittel. Ferner ist nicht ausgeschlossen, dass trotz Vorhandensein von Filtern gasförmige oder sonstige kleinste Flüssigkeitströpfchen von der Prozessluft mitgerissen werden und somit eine Schadstoffbelastung der Prozessabluft darstellen. In dem Kondenser können diese Bestandteile auskondensiert und von der Prozessabluft abgetrennt werden.

Durch die Anordnung des Kondensers unmittelbar in der Apparatur entfallen somit Leitungen zum Zuführen der schadstoffbelasteten Prozessluft zu abseits liegenden Einheiten, die den Kondenser enthalten.

Die Anordnung des Lufterhitzers in der Apparatur erlaubt ein Aufwärmen der Prozessluft auf Prozesstemperatur unmittelbar nachdem diese den Kondenser verlassen hat. Damit sind sowohl der Abkühlvorgang zum Auskondensieren von mitgeführten Schadstoffen und das anschließende Wiedererwärmen auf Prozesstemperatur energiebilanztechnisch günstig durchzuführen.

Das Vorsehen der Filteranordnung hat den Vorteil, dass die Prozessluft von mitgerissenen Feststoffpartikeln befreit wird. Die Filteranordnung kann aus bekannten dynamischen Filtersystemen bestehen, die auch feinste Partikel zurückhalten, die durch Druckstöße periodisch vom Filter abgelöst und der Prozesskammer zurückgeführt werden. Dies können Filterkerzen, Filterpatronen oder auch sogenannte Clownkragen-Filter sein, die am oberen Endbereich der Prozesskammer angeordnet sind.

Das Vorsehen der Filteranordnung strömungstechnisch vor der Vorrichtung zum Konditionieren hat den Vorteil, dass die Prozessluft durch die Filteranordnung von mitgerissenen Feststoffpartikeln befreit wird bevor diese Prozessluft den Kondenser erreicht. Dadurch wird ausgeschlossen, dass die Oberfläche des Kondensers durch diese mitgerissenen Feststoffpartikel verschmutzt wird, diese sich also auf dessen Oberfläche ablagern.

In einer weiteren Ausgestaltung der Erfindung ist die Vorrichtung zur Konditionierung zumindest um die Prozesskammer herum angeordnet.

Diese Maßnahme hat den Vorteil, dass eine sehr kompakte Bauweise resultiert, die zugleich die Möglichkeit eröffnet, einfachen Zugang zu den Bauteilen der Vorrichtung zur Konditionierung von der Außenseite her zu erhalten. Diese kompakte Bauweise erlaubt auch entsprechende Schall- und Wärmedämmmaßnahmen in einfachster Art und Weise.

In einer weiteren Ausgestaltung der Erfindung ist die Filteranordnung ebenfalls um die Prozesskammer herum angeordnet.

Diese Maßnahme hat den Vorteil, dass trotz vorhandener Filter eine kompakte Bauweise der gesamten Apparatur entsteht, und dass auch hier die Filteranordnungen sehr leicht zugänglich sind, nämlich beispielsweise von der Außenseite her.

In einer weiteren Ausgestaltung der Erfindung ist unter dem Boden ein Ventilator zum Umwälzen der Prozessluft angeordnet.

Diese Maßnahme hat den Vorteil, dass die Anordnung unter dem Boden eine Stelle darstellt, an der ein solcher Ventilator günstig untergebracht werden kann, da solche Böden üblicherweise ohnehin eine kreisförmige Außenkontur aufweisen.

In einer weiteren Ausgestaltung der Erfindung ist der Ventilator strömungstechnisch zwischen Kondenser und Lufterhitzer angeordnet.

Diese Maßnahme hat den Vorteil, dass die dem Ventilator zuströmende Prozessluft bereits von allen Schadstoffen befreit ist und von diesem nur noch an dem Lufterhitzer vorbeigeführt und zum Boden verbracht werden muss. Dies erlaubt eine besonderes effektive Steuerung der Konditionierung der Prozessluft hinsichtlich Menge und/oder Wärmeinhalt.

In einer weiteren Ausgestaltung der Erfindung ist zumindest eine Düse vorgesehen, mittels der ein Behandlungsmedium für das Gut in die Prozesskammer einsprühbar ist.

Diese an sich bekannte Maßnahme führt dazu, dass über die Düsen an einer geeigneten Stelle das Behandlungsmedium in die Prozesskammer eingeführt werden kann.

In einer weiteren Ausgestaltung der Erfindung ist Sprühluft zum Versprühen des Behandlungsmediums über eine Leitung von der Prozessluft abziehbar und der Düse zuführbar.

Diese Maßnahme hat nun den erheblichen Vorteil, dass ein in sich abgeschlossenes gasdichtes System geschaffen werden kann. Es entsteht im System ein sogenanntes Luftmengen-Nullsummenspiel dadurch, dass diejenige Luftmenge, die zum Versprühen des Behandlungsmediums durch die Düse benötigt wird, von der Prozessluft abgezweigt und der Düse zugeführt wird. Dies erlaubt eine besonders kompakte Bauweise mit einer nach außen hin gasdichten Führung von sowohl der Prozessluft als auch der Sprühluft für die Düse. Da die Düse in die Prozesskammer hineinsprüht, vermengen sich die von der Düse versprühten Gasmengen mit der Prozessluft, können zusammen aufgearbeitet bzw. konditioniert werden, also insbesondere von Lösemittel oder dergleichen befreit werden und dann wieder als "Rein-Sprühluft" der Düse zugeführt werden.

In einer weiteren Ausgestaltung ist ein Kompressor zum Verdichten der Sprühluft vorgesehen.

Diese Maßnahme hat den Vorteil, dass durch diesen Kompressor individuell die Steuerung des Sprühluftdruckes bzw. der Sprühluftmenge steuerbar ist. Der Kompressor kann ebenfalls integraler Bestandteil der Apparatur sein, kann aber auch außerhalb angeordnet sein, da zwangsläufig das Behandlungsmedium mit irgendwelchen Substanzen von der Außenseite her gespeist werden muss, insbesondere dem Stoff, der dem zu behandelnden Gut zugeführt werden soll.

In einer weiteren Ausgestaltung der Erfindung ist um die Prozesskammer herum ein Ringraum angeordnet, in dem zumindest Teile der Filteranordnung und/oder der Vorrichtung zur Konditionierung angeordnet sind.

Diese Maßnahme hat den Vorteil, dass eine sehr kompakte schlanke Bauweise erzielt wird, in der die Bauteile gut zugänglich um die Prozesskammer herum angeordnet werden.

In einer weiteren Ausgestaltung der Erfindung weist die Prozesskammer eine stehende zylindrische Wand auf, die durch den Boden abgeschlossen ist, unter dem Boden ist ein Lufterhitzer und der Ventilator angeordnet, und in einem Ringraum um die Wand sind ringförmige Filter und zumindest ein nachgeschalteter ringförmiger Kondensator angeordnet.

In dieser speziellen Ausgestaltung findet eine optimale Anpassung der konditionierenden Vorrichtung für die Prozessluft an die Geometrie der Prozesskammer statt, so dass eine besonders kompakte effektiv bauende und somit auch günstig zu betreibende Apparatur resultiert.

In einer weiteren Ausgestaltung der Erfindung weist die Prozesskammer an einem oberen Abströmende einen Deckel auf, der zur Umlenkung der Prozessluft in die Vorrichtung zum Konditionieren dient.

Der Deckel dient also nicht nur als ein Abschluss und ggf. auch als ein Beobachtungsfenster für die Vorgänge in der Prozesskammer, sondern stellt zugleich die Umlenkung der von der Prozesskammer abströmenden Prozessluft in die weiteren aufarbeitenden bzw. konditionierenden Vorrichtungen, wie Filter, Kondenser etc. dar.

In einer weiteren Ausgestaltung der Erfindung ist am Abströmende der Prozesskammer ein Sieb angeordnet. Insbesondere ist von Vorteil, dieses Sieb als Schwingsieb auszubilden.

Diese Maßnahme hat den Vorteil, dass eine Abscheidung von Feststoffpartikeln von der abströmenden Prozessluft möglich ist. Aufgrund der Ausgestaltung als Schwingsieb fallen die Partikel wieder von dem schwingenden Sieb ab und in die Prozesskammer zurück. Diese stehen somit wieder zur Behandlung zur Verfügung. Die Ausgestaltung als flächiges Sieb fördert die kompakte Bauweise der Apparatur.

In einer weiteren Ausgestaltung der Erfindung ist eine Vorrichtung zum Absaugen der von der Filteranordnung rückgehaltenen Feststoffe vorhanden.

Diese Maßnahme hat den Vorteil, dass die Effektivität der Filteranordnung durch das Absaugen von Feststoffen, die von Filtern zurückgehalten wurden, erhöht wird. Dabei müssen bei mehrstufigen Filtern nicht alle Filter abgesaugt werden, sondern es ist ausreichend, den oder die Filter abzusaugen, die den überwiegenden, meist gröberen Teil der Feststoffe zurückhalten.

In einer weiteren Ausgestaltung der Erfindung weist die Vorrichtung zum Absaugen einen bewegbaren Saugstutzen auf, der die Feststoffe von Filtern der Filteranordnung von Zeit zu Zeit absaugt.

Diese Maßnahme hat den Vorteil, dass der Saugstutzen zum Absaugen an die Filter oder über diese hinweg geführt werden kann, so dass das Absaugen während des Betriebs erfolgen kann.

In einer weiteren Ausgestaltung der Erfindung ist, bei einer Filteranordnung mit Filtern, die in einem um die Prozesskammer herum angeordneten Ringraum angeordnet sind, der bewegbare Saugstutzen als umlaufender Saugstutzen ausgebildet.

Diese Maßnahme hat den Vorteil, dass durch den umlaufenden Saugstutzen laufend Feststoffe von der Filteranordnung abgesaugt werden können, gleichzeitig aber ausreichende Bereiche der Filter immer frei sind für den eigentlichen Filtervorgang.

In einer weiteren Ausgestaltung der Erfindung ist die von der Vorrichtung zum Absaugen abgesaugte Prozessluft, nach Abtrennen der abgesaugten Feststoffe, wieder der Apparatur rückführbar.

Diese Maßnahme hat den Vorteil, dass das Prinzip der geschlossenen Kreislaufführung auch in dieser Ausgestaltung aufrecht erhalten wird, indem die abgesaugte Prozessluft wieder rückgeführt wird.

In einer weiteren Ausgestaltung der Erfindung ist am Abströmende der Prozesskammer ein Sieb angeordnet, und es ist eine Vorrichtung zum Abblasen vom am Sieb anhängender Gutware vorgesehen.

Das Sieb, das kleine partikelförmige Feststoffe durchlässt, die anschließend von den zuvor erwähnten Filtern rückgehalten werden, hält von der Prozessluft mitgerissene größere Partikel der Gutware zurück.

Diese werden entweder von der durch das Sieb hindurchströmenden Prozessluft an der Unterseite des Siebes gehalten, oder haften aufgrund von Verhakungen mit den Maschen des Siebes oder aufgrund von noch klebriger Konsistenz an der Unterseite des Siebes.

Dadurch sind diese Teile der Gutware von dem weiteren Behandlungsprozess ausgeschlossen und müssen, um ein möglichst gleichmäßiges Behandlungsergebnis zu erzielen, wieder in die Prozesskammer rückgeführt werden. Dies erfolgt nunmehr durch diese Vorrichtung zum Abblasen.

In einer weiteren Ausgestaltung der Erfindung weist die Vorrichtung zum Abblasen einen über dem Sieb laufenden Blasschuh auf.

Diese Maßnahme hat den Vorteil, dass der Blasschuh laufend Teile des Siebes freiblasen kann, zugleich aber genügend Bereiche des Siebes frei sind, um die Prozessluft durchtreten zu lassen, um die insgesamte Kreislaufführung in der Apparatur aufrecht zu erhalten.

In einer weiteren vorteilhaften Ausgestaltung der Erfindung sind die Vorrichtung zum Absaugen der Filter und die Vorrichtung zum Abblasen des Siebes derart kombiniert, dass die von der Vorrichtung zum Absaugen abgesaugte Prozessluft der Vorrichtung zum Abblasen zuführbar ist.

Diese Maßnahme hat wiederum den Vorteil, dass eine geschlossene Kreislaufführung auch bei dieser Ausgestaltung des Reinigens/Abblasens durchgeführt wird, da nämlich die Luftmenge, die zum Absaugen der Filter abgesaugt wird, nach Abtrennen der ausgefilterten Feststoffe, dem System beim Abblasen des Siebes wieder zurückgeführt wird.

In einer weiteren Ausgestaltung der Erfindung ist über der Prozesskammer ein sich radial erstreckender, rotierter, kombinierter Blas/Saugschuh angeordnet.

Diese Maßnahme hat den Vorteil, dass die beiden Vorrichtungen zum Saugen und Blasen ein gemeinsames Bauelement aufweisen.

In einer weiteren Ausgestaltung weist der Blas/Saugschuh eine Saugöffnung auf, die im Bereich der Filter mündet, und weist ferner eine Blasöffnung auf, die im Bereich des Siebes mündet.

Der umlaufende Blas/Saugschuh saugt somit über die Saugöffnung die Filter bzw. die von diesen rückgehaltenen Feststoffe ab und gleichzeitig bläst er die rückgeführte Luft durch das Sieb und löst dabei anhaftende Gutware ab.

In einer weiteren Ausgestaltung ist ein Sauggerät vorgesehen, das mit dem Blas/Saugschuh verbunden ist.

Diese Maßnahme hat den Vorteil, dass beispielsweise ein zur Verfügung stehender Industriestaubsauger der Apparatur beigeordnet werden kann, der die Luft absaugt, die mitgerissenen Feststoffpartikel von dieser abtrennt und dann die "Abluft" wieder dem Blasschuh zuführt.

Dies ist nicht nur eine äußerst kosteneffektive Ausgestaltung, da Industriestaubsauger verschiedener Ausgestaltung zur Verfügung stehen, sondern erlaubt eine gezielte Sammlung der von den Filtern rückgehaltenen und von diesen dann abgesaugten Feststoffen.

Je nachdem, ob es sich dabei um hochwertige Feststoffe, beispielsweise im pharmazeutischen Bereich handelt, können diese wieder verwendet werden. Wenn es sich um kritische oder umweltgefährdende Stoffe handelt, können die gezielt aus der Apparatur abgeführt und gesammelt werden.

In einer weiteren Ausgestaltung der Erfindung weist der Kondenser einen ersten Kondenser zum Auskondensieren von Wasser und einen zweiten nachgeschalteten Kondenser zum Auskondensieren von Lösungsmittel mit niedrigerem Taupunkt als Wasser auf.

Insbesondere im pharmazeutischen Bereich werden bei der Behandlung des Gutes in der Prozesskammer sowohl wässrige Lösungen als auch Lösungen in organischen Lösungsmitteln verarbeitet. Durch die zweistufige Ausbildung kann zunächst das Wasser auskondensiert werden und anschließend diejenigen Lösungsmittel, die einen wesentlich niedrigeren Taupunkt aufweisen. Dies hat nicht nur den Vorteil, dass durch die zweistufige Kondensation diese beiden Stoffe getrennt rückgewonnen werden können, sondern dass auch verhindert wird, dass beispielsweise ein Kondenser, der mit einem extrem kühlen Kühlmittel betrieben wird durch auskondensiertes Wasser vereist.

In einer weiteren Ausgestaltung der Erfindung ist ein Anschluss zur Zufuhr eines Inertgases vorgesehen.

Diese Maßnahme hat den erheblichen Vorteil, dass der Innenraum der Prozesskammer mit einem solchen Schutzgas gefüllt werden kann, so dass diese Anlage explosionsgeschützt arbeiten kann, wozu sichergestellt wird, dass beispielsweise die Sauerstoffkonzentration unter 6 Vol.-% gehalten wird.

In einer weiteren Ausgestaltung der Erfindung ist ein Gassensor zur Messung der Gaszusammensetzung der Prozessluft, insbesondere des Sauerstoffgehaltes vorgesehen.

Diese Maßnahme hat den Vorteil, dass mittels des Gassensors eine laufende Analyse der Gaszusammensetzung des Prozessgases stattfinden kann, so dass die Gefahr von Explosionen ausgeschlossen werden kann.

Es versteht sich, dass die vorgenannten und nachstehend noch zu erläuternden Merkmale nicht nur in der angegebenen Kombination, sondern auch in anderen Kombinationen oder in Alleinstellung einsetzbar sind, ohne den Rahmen der vorliegenden Erfindung zu verlassen.

Die Erfindung wird anhand eines ausgewählten Ausführungsbeispiels in Zusammenhang mit den beiliegenden Zeichnungen näher beschrieben und erläutert. Es zeigen:
- Figur 1: einen Vertikalschnitt durch eine erfindungsgemäße Apparatur mit integrierter Vorrichtung zur Konditionierung der Prozessluft und zu deren Umwälzung,
- Figur 2: einen Querschnitt durch die Apparatur von Figur 1,
- Figur 3: stark schematisiert ein Prinzipschema der erfindungsgemäßen Apparatur mit einigen imperiphären Zusatzgeräten zur Versorgung der Düse,
- Fig. 4: zeigt einen der Fig. 1 vergleichbaren Vertikalschnitt durch eine weitere Ausgestaltung einer erfindungsgemäßen Apparatur,
- Fig. 5: einem dem Schnitt von Fig. 2 vergleichbaren Schnitt der Apparatur von Fig. 4, und
- Fig. 6: ein der Fig. 3 entsprechendes Prinzipschema der weiteren Ausgestaltung der Apparatur.

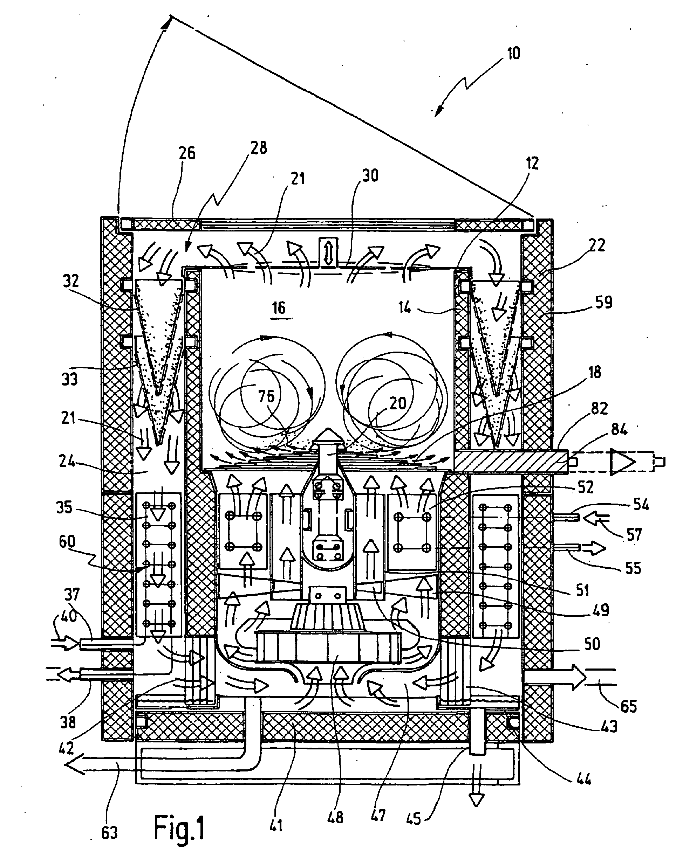

Eine in den Figuren 1 bis 3 dargestellte Apparatur zur Behandlung von partikelförmigem Gut ist in ihrer Gesamtheit mit der Bezugsziffer 10 bezeichnet.

Wie insbesondere aus der Schnittdarstellung von Figur 1 hervorgeht, weist die Apparatur 10 einen Behälter 12 auf, der eine innere stehende hohlzylindrische Wand 14 aufweist. Die Wand 14 umgrenzt eine Prozesskammer 16, die durch einen Boden 18 abgeschlossen ist.

Der Boden 18 ist aus einer Reihe an sieben übereinander gelegten Ringblechen zusammengesetzt, die sich einander teilweise überlappen, so dass zwischen den Ringblechen Schlitze ausgebildet sind, die ringförmige Durchtrittsöffnungen durch den Boden darstellen.

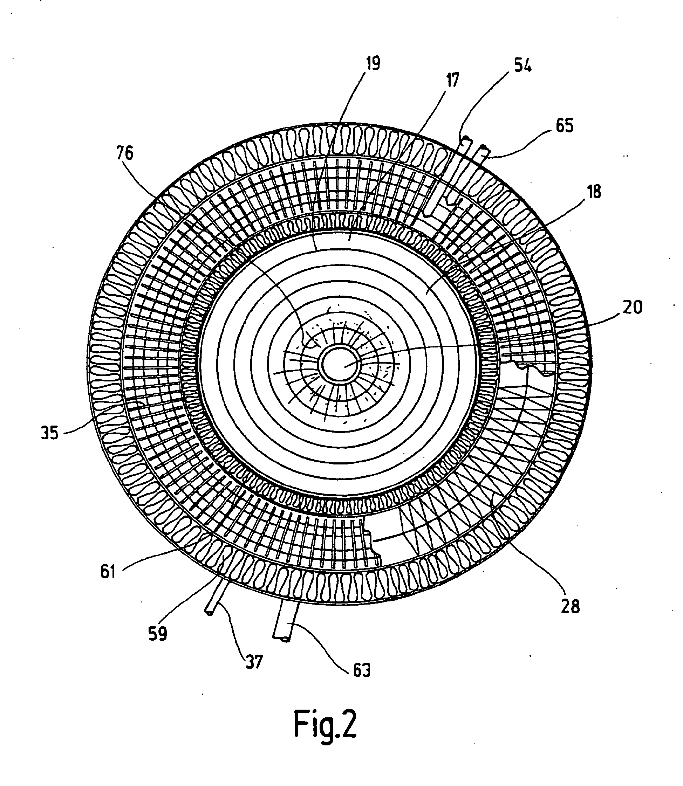

In der Draufsicht von Figur 2 ist stellvertretend ein solches Ringblech mit der Bezugsziffer 17 bezeichnet, ein entsprechender ringförmiger Schlitz mit der Bezugsziffer 19.

Mittig im Boden 18 ist eine Düse 20 aufgenommen, die als Ringspaltdüse ausgebildet ist, wobei der hier nicht bezeichnete Ringspalt der Düse 20 umfänglich verläuft und die Düse 20 somit in der Bodenebene ringförmig aussprüht.

Die nähere Ausgestaltung und die Arbeitsweise eines solchen Bodens ist beispielsweise in der DE 102 48 116 C1 beschrieben, auf die diesbezüglich ausdrücklich Bezug genommen wird.

Eine derartige Zerstäubungsdüse mit einem 180° Sprühwinkel und einem Umschlingungswinkel von 360° ist beispielsweise in der DE 102 32 863 A1 beschrieben, auf die hier ausdrücklich Bezug genommen wird.

Die Kombination eines solchen Bodens mit einer derartigen Sprühdüse ist ferner in der internationalen Patentanmeldung PCT/EP 2004/010096 vom 10.09.2004 beschrieben.

Die innere Wand 14 ist im Abstand von einer äußeren Wand 22 umrundet, wodurch zwischen den Wänden 14 und 22 ein Ringraum 24 ausgebildet ist. Die Außenwand 22 überragt in der Höhe etwas die Wand 14 und ist mit einem Deckel 26 verschlossen.

Eine Filteranordnung 28 weist ein Schwingsieb 30 auf, das das obere Ende der Wand 14 bedeckt.

Im oberen Bereich des Ringraumes 24 sind zwei ringförmig umlaufende V-Filter 32 und 33 zwei verschiedener Filterklassen angeordnet.

Das Schwingsieb 30 dient als Abluftvorfilter, das V-Filter 32 als Abluftfeinfilter und das darunter liegende V-Filter 33 als Abluftfeinstfilter.

Unterhalb der Filteranordnung 28 ist im Ringraum 24 ein zweistufiger 35 angeordnet, der über Anschlüsse 37, 38 mit einem Kühlmedium 40 beaufschlagbar ist. Je nach Art der auszukondensierenden Stoffe, beispielsweise Wasser und Lösungsmittel, wie Aceton, Isopropanol, Ethanol etc., werden über Anschlüsse 37 und 38 Kühlmedien 40 im Bereich von -40°C bis +5°C zugeführt.

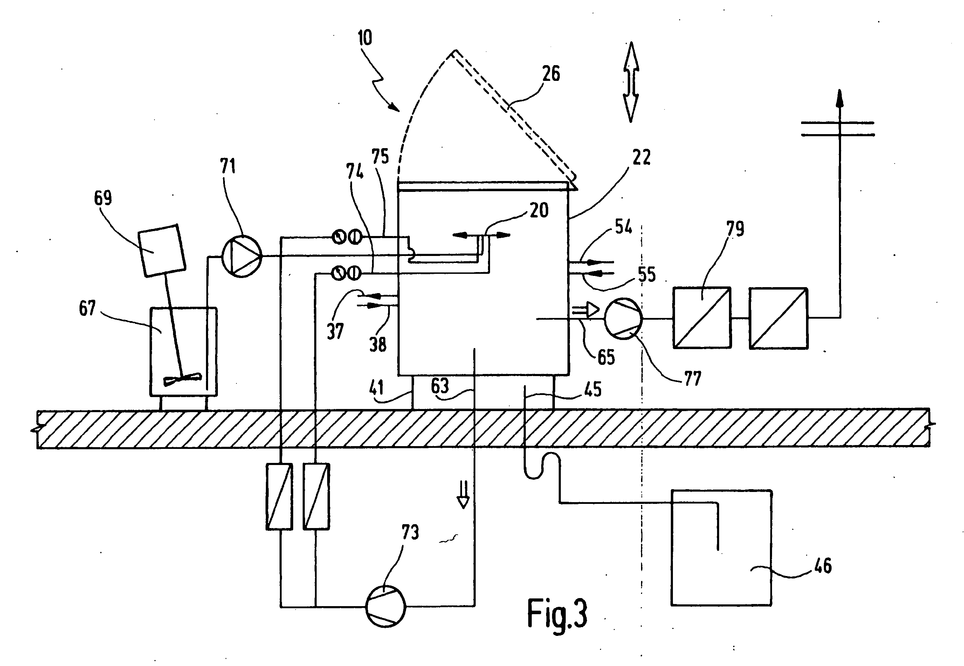

Die innere Wand 14 endet im Abstand vor einem Sockel 41, der einen unteren Abschluss der äußeren Wand 22 darstellt. Dadurch ist eine ringförmige Öffnung 42 vorhanden. Im Bereich dieser Öffnung 42 ist ein Tropfenabscheider 43 angeordnet, der über einer Sammelwanne 44 steht, die mit einem Auslass 45 verbunden ist, so dass auskondensierte Flüssigkeiten einem Sammelgefäß 46 (siehe Figur 3) zugeführt werden können.

In einem Raum 47 unterhalb des Bodens 18 und innerhalb der Wand 14 ist ein Ventilator 48 angeordnet, der als Radialgebläse wirkt. Dieser saugende Zentrifugal-Hochleistungsventilator wird über einen hydraulischen, pneumatischen oder elektrischen Antrieb betrieben. Mittig zentral über dem Ventilator 48 steht die Düse 20, die nach unten vom Boden 18 aus der Apparatur 10 abziehbar ist. Der etwa zylindrische Körper der mittigen Düse 20, der sich unterhalb des Bodens 18 erstreckt, ist im Abstand von einem Rohr 51 umgeben.

Um das Rohr 51 herum ist ein Lufterhitzer 52 angeordnet, der über Anschlüsse 54, 55 zur Außenseite hin mit einem Heizmedium 57 versorgbar ist. Die Heizmedien können Warmwasser, Heißwasser oder Dampf sein. Er kann auch mit elektrischer Energie betrieben werden.

Im Raum zwischen der Außenseite des Körpers der Düse 20 und dem Rohr 51 sind Klappen 50 angeordnet.

Zwischen dem Ventilator 48 und dem Lufterhitzer 52 sind weitere Klappen 49 angeordnet.

Je nach Stellung der Klappen wird mehr oder weniger Prozessluft, die durch den Ventilator 58 Richtung Lufterhitzer 52 bewegt wird, direkt dem Lufterhitzer 52 zugeführt oder im Bypass zwischen Lufterhitzer 52 und Körper der Düse 20 der Unterseite des Bodens 18 zugeführt. Eine hier nicht näher dargestellte Steuerung erlaubt ein entsprechendes Verstellen der Klappen.

Wie aus den Schnittdarstellungen ersichtlich, sind die Wände 14, 22 mit einer Isolation 59 bzw. einer Isolation 61 versehen, so dass der 35 thermisch vom Lufterhitzer 52 isoliert ist und umgekehrt.

Der im Ringraum 24 angeordnete 35, der Ventilator 48 und der Lufterhitzer 52 bilden Teile einer Vorrichtung 60 zum Konditionieren von Prozessluft 2i und zur Umwälzung der Prozessluft 21 im Kreislauf.

Um ein in sich abgeschlossenes Kreislaufsystem auszubilden, wird über eine Ansaugleitung 63 Prozessluft 21, nachdem diese die Tropfenabscheider 43 durchdrungen hat, aus der Apparatur 10 abgeführt, wie das aus Figur 3 ersichtlich ist.

Die über die Ansaugleitung 63 abgezogene Prozessluft 21 wird von einem Kompressor 73 verdichtet und über zwei Leitungen 74, 75 der Düse 20 als Sprühluft wieder zugeführt. Das von der Düse 20 zu versprühende Behandlungsmedium 76 wird in einem Mischbehälter 67 mit einem Rührer 69 aufbereitet und über eine Pumpe 71 der Düse 20 zugeführt.

Wie bereits zuvor erwähnt ist die Düse 20 mit einer Ringspaltdüse versehen, die das Behandlungsmedium im Zusammenwirken mit der Sprühluft zu einer etwa horizontal im Abstand über der obersten Leitplatte des Bodens 20 verlaufenden planebenen Sprühflade aussprüht.

Die Anordnung der übereinander angeordneten Ringbleche 17 ist derart, dass die Prozessluft 21 in einer radial von innen nach außen gerichteten Strömung austritt, von der Innenseite der Wand 14 nach oben umgelenkt wird, die dabei zu behandelnden Gutteilchen mitreißt, die anschließend dann wieder mittig auf den Kopf der Düse 20 zurückfallen, wie das in Figur 1 durch die entsprechende Bewegungspfeile dargestellt ist.

In der Prozesskammer 16 werden also die zu behandelnden Gutteilchen durch die durch den Boden 18 hindurchtretende Prozessluft 21 verwirbelt, beispielsweise zu einem toroidal umlaufenden Ring. Die planeben ausgesprühte Sprühflade behandelt das zu behandelnde Gut äußerst gleichmäßig.

Die Prozessluft 21 tritt am oberen Ende der Prozesskammer 16 aus dieser aus und tritt dabei durch das Schwingsieb 30 hindurch, wodurch grobe mitgerissene Feststoffteile abgetrennt werden und durch die Anordnung als Schwingsieb von diesen bzw. von dessen Unterseite wieder abgeschüttelt und der Prozesskammer 16 zurückgeführt werden.

Von der Unterseite des Deckels 26 wird die Prozessabluft 21 vertikal nach unten umgelenkt und gleichmäßig in den Ringraum 24 eingeführt. Sie strömt in dem Ringraum 24 von oben nach unten, durchströmt den ersten V-Filter 32 sowie den zweiten V-Filter 33, wodurch auch feinste mitgerissene Feststoffpartikel ausgefiltert werden.

Anschließend durchläuft die Prozessabluft den zweistufigen Kondenser 35, durch den sowohl Wasser als auch andere Lösemittel auskondensiert werden. Das Kondensat wird in der bodenseitigen Sammelwanne 44 gesammelt.

Die Tropfenabscheider 43 sorgen dafür, dass noch feine mitgerissene Tropfen abgetrennt werden.

Die so aufgearbeitete Prozessabluft 21 strömt nunmehr in den Raum 47 und ist von allfälligen Verunreinigungen, sei es von Feststoffen oder von Flüssigkeitsteilchen befreit. Über die Ansaugleitung 63 wird ein Teil angesaugt und wie zuvor beschrieben über den Kompressor 33 der Düse 20 als Sprühluft zugeführt.

Die Prozessluft 21 wird über den Ventilator 48 dem Lufterhitzer 52 zugeführt, wobei der Prozessluft 21 ein entsprechender Wärmeinhalt übertragen wird.

Je nach Stellung der Klappen 49, 50 wird mehr oder weniger Prozessluft 21 unmittelbar über den Lufterhitzer 52 geführt.

Die nunmehr erwärmte Prozessluft wird der Unterseite des Bodens 18 zugeführt, tritt durch die Schlitze 19 im Boden durch und bildet ein zunächst etwa horizontal ausgerichtetes Luftpolster, auf dem sich der toroidal bewegte, stark fluidisierte Ring an verwirbelten Gutteilchen befindet.

Aus Figur 1 und Figur 3 ist ersichtlich, dass über einen Anschluss 65, der mit einem Ventilator 77 verbunden ist, dem Aktivkohlefilter 79 nachgeschaltet sind, im System dauerhaft ein gewisser Unterdruck von etwa 100 Pa aufrecht erhalten werden kann.

In dem System selbst besteht ein sogenanntes Luftmengen-Nullsummenspiel, das heißt die über die Ansaugleitung 63 aus dem inneren Kreislauf abgezogene Prozessluft wird wieder als Sprühluft über die Düse zugeführt, so dass keine Prozessluftmengen die Apparatur verlassen oder dieser von außen zugeführt werden müssen. Da in solchen Systemen gegenüber der Außenseite ein gewisser Unterdruck aufrecht erhalten werden soll, ist der als Schnüffel-Ventilator bezeichnete Ventilator 77 vorhanden, der in der Lage ist, den Systemunterdruck von 100 Pa herzustellen und gleichzeitig die Packung des Aktivkohlefilters 70 bzw. dessen Widerstand zu überwinden.

In der Praxis ist das System vollkommen gasdicht, der Schnüffelventilator 77 arbeitet immer gegen den Unterdruck, fördert aber keine Luftmenge, weil eine Leckage nicht vorhanden ist.

Die Befüllung der Prozesskammer 16 mit dem zu behandelnden Gut kann von oben bei geöffnetem Deckel 26 und abgehobenem Schwingsieb 30 erfolgen.

Die Entleerung des behandelten Gutes erfolgt radial oder tangential über einen Stutzen 82, der einen radial oder tangential angeordneten Verschlussstopfen 84 aufweist, welcher manuell oder mechanisiert/automatisiert herausgezogen oder wieder eingesteckt werden kann. Das durch die Prozessluft 21 über den Boden 18 radial und tangential bewegte Produkt aus behandelten Gutteilchen findet selbständig den Weg zu dem Entleerstutzen 82 in ein entsprechendes, hier nicht näher dargestelltes Aufnahmegefäß.

Die dargestellte Anordnung erlaubt auch eine sehr einfache Reinigung des gesamten Innenraums des Systems.

Es ist möglich, den gesamten Innenraum mit einer Spül-/Reinigungsflüssigkeit zu fluten und diese durch nunmehr relativ langsames Bewegen des Ventilators 48 umzuwälzen, also quasi einen Art Waschmaschineneffekt zu erzielen.

Für eine einfache Zugänglichkeit für die im Ringraum 24 aufgenommenen Teile der Vorrichtung 60 ist es möglich, die gesamte äußere Wand 22 anzuheben, oder diese äußere Wand 22 als segmentweise bewegbare aufschwingbare Türen auszubilden.

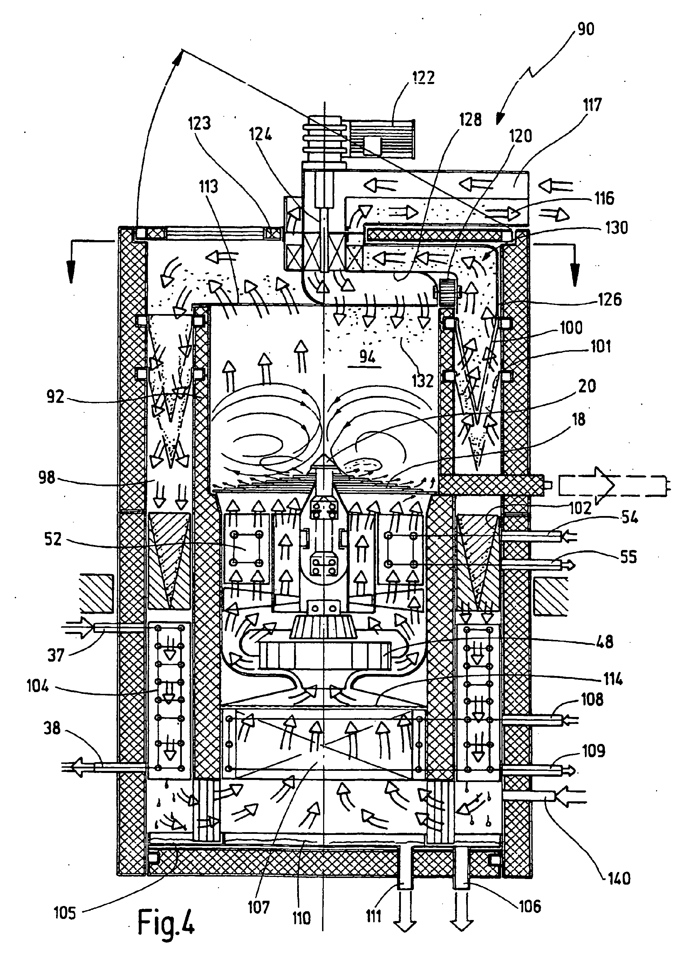

In den Figuren 4 bis 6 ist eine weitere Ausgestaltung einer erfindungsgemäßen Apparatur dargestellt, die in ihrer Gesamtheit mit der Bezugsziffer 90 bezeichnet ist.

Die Apparatur 90 ist in zahlreichen Bauelementen gleich aufgebaut wie die in Figur 1 bis 3 beschriebene Apparatur, so dass an sich gleiche Bauteile auch mit den gleichen Bezugsziffern versehen sind.

Die Apparatur 90 weist, wie zuvor beschrieben, einen stehenden hohlzylindrischen Behälter 92 auf, der eine Prozesskammer 94 umschließt.

Die Prozesskammer 94 weist einen Boden 96 auf, der gleich ausgebildet ist wie der zuvor beschriebene Boden 18, in dem mittig eine entsprechende Düse 20 aufgenommen ist, die an ihrer Unterseite den Ventilator 48 trägt. Entsprechend ist auch ein Lufterhitzer 52 mit dessen Anschlüssen 54 und 55 vorgesehen.

Auch bei der Apparatur 90 ist die Prozesskammer 94 von einem Ringraum 98 umgeben, in dem entsprechende Bauteile der Vorrichtung zur Konditionierung der Prozessluft angeordnet sind.

So ist ersichtlich, dass auch hier zwei ringförmige V-Filter 100 und 101 am oberen anströmseitigen Ende des Ringraumes 98 angeordnet sind.

Im Unterschied zu der Apparatur 10 ist noch ein dritter V-Filter 102 strömungstechnisch nach dem zweiten V-Filter 101 angeordnet.

Dieser dritte V-Filter 102 dient als eine dritte statische Filterstufe, als sogenannte S-Filterklasse, also als ein Schwebstofffilter.

Ferner ist zum Unterschied zu der in Figur 1 gezeigten Apparatur 10 der Kondenser 35 als zweiteiliger Kondenser ausgebildet.

In dem Ringraum 98 ist dazu, strömungstechnisch nach dem dritten V-Filter 102, ein ringförmiger erster Kondenser 104 vorgesehen, der dazu dient, Wasser aus der Prozessluft auszukondensieren. Über die entsprechenden Anschlüsse 37 und 38 wird entweder kaltes Wasser beispielsweise mit 6°/12°C oder eine Sohle mit -5°/0°C zu- bzw. wieder abgeführt. Das vom ersten Kondenser 104 auskondensierte Wasser wird von einer ringförmigen Auffangwanne 105 aufgefangen und wird über einen Auslass 106, einem Auffanggefäß 46, wie es schon im Zusammenhang mit Figur 3 beschrieben wurde, zugeführt.

Ein zweiter Kondenser 107 ist am unteren Ende des Behälters 92 angeordnet und wird über entsprechende Anschlüsse 108, 109 mit einem Kühlmedium versorgt, beispielsweise einem Tief-Temperaturkältemittel (- -20°C) wie beispielsweise Frigen.

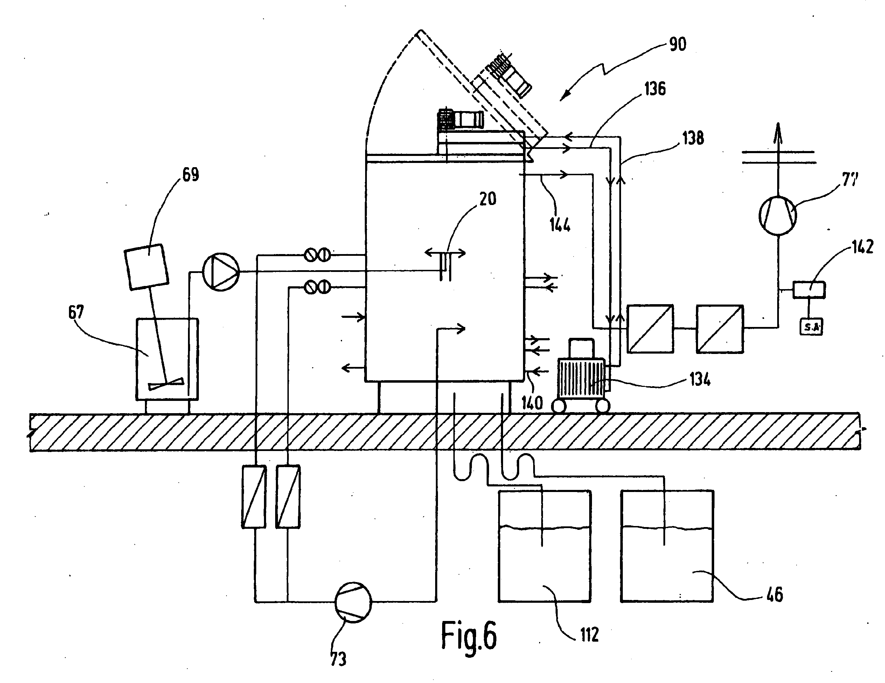

Dieser zweite Kondenser 107 dient dazu, um Flüssigkeiten mit einem niedrigeren Taupunkt als Wasser auszukondensieren, also beispielsweise organische Lösungsmittel. Das vom zweiten Kondenser 107 auskondensierte Kondensat wird in einer bodenseitigen Auffangwanne 110 aufgefangen und über einen Auslass 111 einem zweiten Auffanggefäß 112 zugeführt, wie das aus Figur 6 ersichtlich ist. Über dem zweiten Kondenser 107 ist ein Lochblech 114 angeordnet, das als Strömungsgleichrichter fungiert, so dass eine relativ gleichgerichtete Strömung nunmehr über den Ventilator 48 der Unterseite des Bodens 96 über den Lufterhitzer 52 zugeführt wird.

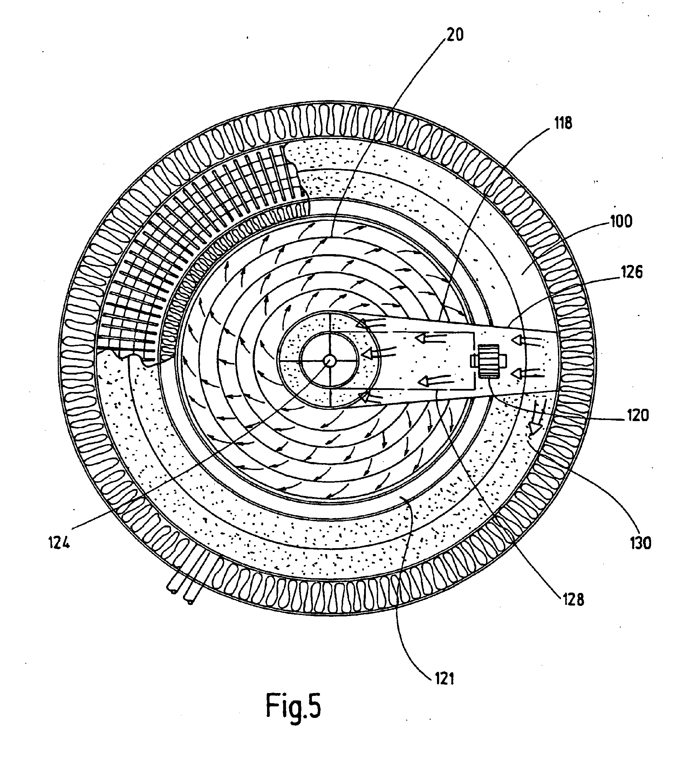

Im Deckel 123 der Apparatur 90 ist eine Vorrichtung 116 zum Absaugen von Prozessluft sowie eine Vorrichtung 117 zum Einblasen von Prozessluft angeordnet. Diese beiden Vorrichtungen 116, 117 sind derart kombiniert, dass sie einen gemeinsamen Saug/Blasschuh 118 aufweisen, wie dieser insbesondere auch aus Figur 5 ersichtlich ist.

Der Saug/Blasschuh 118 ruht über eine Laufrolle 120 auf der Oberkante 121 des Behälters 92. Ein mittiger zentraler ebenfalls im Deckel 123 aufgenommener Antrieb 122 sorgt dafür, dass der Saug/Blasschuh 118 rotiert, und zwar um die zentrale stehende Mittellängsachse der Apparatur 90, also um die Längsachse der Antriebswelle 124, wie das aus Figur 4 und 5 ersichtlich ist.

Aus Figur 5 ist ersichtlich, dass der Saug/Blasschuh 118 in Uhrzeigerrichtung umläuft, beispielsweise mit einer Rotationsgeschwindigkeit von 5 bis 10 U/min. Das obere Ende der Prozesskammer bzw. des Behälters 92 ist mit einem statischen Sieb 113 abgeschlossen.

Aus der Schnittzeichnung von Figur 4 ist ersichtlich, dass der Saug/Blasschuh 118 einen Saugstutzen 126 aufweist, dessen Öffnung direkt über dem V-Filter 100 mündet. Ein entsprechender Blasschuh 128 ist so ausgebildet, dass dessen Ausblasöffnung direkt über dem Sieb 113 mündet.

Aus der Draufsicht von Figur 5 ist ersichtlich, dass sich dieser Saug/Blasschuh 118 etwa radial und gleichzeitig über einen gewissen Umfangsabschnitt des obersten V-Filters 100 erstreckt. Durch den Saugstutzen werden die Filter 100 und 101 abgesaugt. Gleichzeitig wird der radial weiter innen liegende Bereich des Siebes 113 abgeblasen.

Wie aus Figur 6 ersichtlich, ist die kombinierte Vorrichtung zum Saugen und Blasen über entsprechende Leitungen 136 und 137 mit einem Sauggerät 134 in Form eines Industriestaubsaugers verbunden.

In anderen Worten ausgedrückt, saugt das Sauggerät 134 über den Saugstutzen 126 die Filter 100 und 101 ab, d.h. die von diesen rückgehaltenen Feststoffe 130 werden mitgerissen, dem Sauggerät 134 zugeführt, dort ausgefiltert und die "Abluft" wird dem Blasschuh 128 rückgeführt und durch diese wird an der Unterseite des Siebes 113 anhaftende Gutware 132 in die Prozesskammer 94 bzw. in die über dem Boden 96 verwirbelnden zu behandelnden Gutteilchen wieder zugeführt. Somit ist dies in einem geschlossenen Kreislauf durchführbar.

Aus Figur 4 ist ersichtlich, dass ein Inertgasanschluss 140 vorgesehen ist, über den der Innenraum mit einem Inertgas beaufschlagbar oder spülbar ist.

In dem zuvor in Zusammenhang mit Figur 3 beschriebenen System zur Aufrechterhaltung eines Unterdrucks mit dem Schnüffel-Ventilator 77 ist zusätzlich ein Gassensor 142 integriert, der über die Leitung 144 mit der Prozessluft in Verbindung steht. Durch diesen Gassensor 142 kann die jeweilige Gaszusammensetzung analysiert werden, insbesondere dahingehend, ob eine explosive Mischung vorliegt, was dann nicht der Fall ist, wenn die Sauerstoffkonzentration unter 6 Vol.-% gehalten wird. Entsprechende steuertechnische Maßnahmen können dann noch vorgesehen werden, um einen solchen Sauerstoffschwellwert nicht zu überschreiten.

## Patentansprüche

1. Apparatur zur Behandlung von partikelförmigem Gut, mit einer Prozesskammer (16, 94) zum Aufnehmen und Behandeln des Gutes, die einen mit Durchtrittsöffnungen versehenen Boden (18, 96) aufweist, durch die Prozessluft (21) in die Prozesskammer (16, 94) einführbar ist, und mit einem Auslass zum Abführen von Prozessluft (21) von der Prozesskammer (16, 94), wobei in die Apparatur (10, 90) eine Vorrichtung (60) zur Konditionierung der Prozessluft (21) und zur Umwälzung der Prozessluft (21) im Kreislauf integriert ist, wobei die Vorrichtung (60) zur Konditionierung zumindest einen Kondenser (35; 104, 107) und einen Lufterhitzer (52) aufweist, und dass eine Filteranordnung (28) vorgesehen ist, um Feststoffe (130) aus der von der Prozesskammer (16, 94) abströmenden Prozessluft (21) zu entfernen, wobei Filter (30, 32, 33; 100, 101, 102) der Filteranordnung (28) strömungstechnisch vor der Vorrichtung (60) zum Konditionieren der Prozessluft angeordnet sind, wobei um die Prozesskammer (16) herum ein Ringraum (24, 98) angeordnet ist, der zumindest Teile der Filteranordnung (28) und/oder der Vorrichtung (60) zum Konditionieren aufnimmt.

2. Apparatur nach Anspruch 1, **dadurch gekennzeichnet, dass** unter dem Boden (18, 96) ein Ventilator (48) zum Umwälzen der Prozessluft (21) angeordnet ist.

3. Apparatur nach Anspruch 2, **dadurch gekennzeichnet, dass** der Ventilator (48) strömungstechnisch zwischen Kondenser (35; 104, 107) und Lufterhitzer (52) angeordnet ist.

4. Apparatur nach einem der Anspruche 1 bis 3, **dadurch gekennzeichnet, dass** zumindest eine Düse (20) vorgesehen ist, mittels der ein Behandlungsmedium (76) für das Gut in die Prozesskammer (16, 94) einsprühbar ist.

5. Apparatur nach Anspruch 4, **dadurch gekennzeichnet, dass** Sprühluft zum Versprühen des Behandlungsmediums (76) über eine Leitung (63) von der Prozessluft (21) abziehbar ist und der Düse (20) zuführbar ist.

6. Apparatur nach Anspruch 5, **dadurch gekennzeichnet, dass** ein Kompressor (73) zum Verdichten der Sprühluft vorgesehen ist.

7. Apparatur nach Anspruch 1, **dadurch gekennzeichnet, dass** die Prozesskammer (16, 96) eine stehende zylindrische Wand (14) aufweist, die durch den Boden (18) abgeschlossen ist, dass unter dem Boden (18) ein Lufterhitzer (52) und der Ventilator (48) angeordnet sind, und dass in einem Ringraum (24, 98) um die Wand (14) ringförmige Filter (32, 33; 100, 101, 102) und zumindest ein nachgeschalteter ringförmiger Kondenser (35) angeordnet sind.

8. Apparatur nach einem der Ansprüche 1 bis 7, **dadurch gekennzeichnet, dass** an einem oberen Abströmende ein Deckel (26, 123) vorgesehen ist, der zur Umlenkung der Prozessluft (21) in die Vorrichtung (60) zum Konditionieren der Prozessluft dient.

9. Apparatur nach Anspruch 8, **dadurch gekennzeichnet, dass** am Abströmende der Prozesskammer (16) ein Sieb (30; 113) angeordnet ist.

10. Apparatur nach Anspruch 9, **dadurch gekennzeichnet, dass** das Sieb als Schwingsieb (30) ausgebildet ist.

11. Apparatur nach einem der Ansprüche 1 bis 10, **dadurch gekennzeichnet, dass** eine Vorrichtung (116) zum Absaugen der von der Filteranordnung rückgehaltenen Feststoffe (130) vorhanden ist.

12. Apparatur nach Anspruch 11, **dadurch gekennzeichnet, dass** die Vorrichtung (116) zum Absaugen einen bewegbaren Saugstutzen (126) aufweist, der die Feststoffe (130) von den Filtern (100, 101) der Filteranordnung von Zeit zu Zeit absaugt.

13. Apparatur nach Anspruch 12, **dadurch gekennzeichnet, dass** bei einer Filteranordnung mit Filtern (100, 101), die in einem um die Prozesskammer (94) vorhandenen Ringraum (38) angeordnet sind, der bewegbare Saugstutzen (120) als umlaufender Saugstutzen. (126) ausgebildet ist.

14. Apparatur nach einem der Ansprüche 11 bis 13, **dadurch gekennzeichnet, dass** von der Vorrichtung (116) zum Absaugen abgesaugte Prozessluft, nach Abtrennen der abgesaugten Feststoffe (130), wieder der Apparatur (90) rückführbar ist.

15. Apparatur nach einem der Ansprüche 1 bis 14, **dadurch gekennzeichnet, dass** am Abströmende der Prozesskammer (94) ein Sieb (113) angeordnet ist, und dass eine Vorrichtung (117) zum Abblasen von am Sieb (113) anhängender Gutware (132) vorgesehen ist.

16. Apparatur nach Anspruch 15, **dadurch gekennzeichnet, dass** die Vorrichtung (117) zum Abblasen bewegbar ausgebildet ist, um die am Sieb (113) anhängende Gutware (132) von Zeit zu Zeit abzublasen.

17. Apparatur nach Anspruch 15 oder 16, **dadurch gekennzeichnet, dass** die Vorrichtung (117) zum Abblasen einen über dem Sieb (113) laufenden Blasschuh (128) aufweist.

18. Apparatur nach einem der Ansprüche 11 bis 17, **dadurch gekennzeichnet, dass** die Vorrichtung (116) zum Absaugen der Filter (100, 101) und die Vorrichtung (117) zum Abblasen des Siebes (113) derart kombiniert sind, dass die von der Vorrichtung (116) zum Absaugen abgesaugte Prozessluft der Vorrichtung (117) zum Abblasen zuführbar ist.

19. Apparatur nach Anspruch 18, **dadurch gekennzeichnet, dass** über der Prozesskammer (94) ein sich radial erstreckender, rotierender, kombinierter Blas/Saugschuh (118) angeordnet ist.

20. Apparatur nach Anspruch 19, **dadurch gekennzeichnet, dass** der Blas/Saugschuh (118) eine Saugöffnung aufweist, die im Bereich der Filter (100, 101) mündet, und ferner eine Blasöffnung aufweist, die im Bereich des Siebes (113) mündet.

21. Apparatur nach Anspruch 19 oder 20, **dadurch gekennzeichnet, dass** ein Sauggerät (134) vorgesehen ist, das mit dem Blas/Saugschuh (118) verbunden ist.

22. Apparatur nach einem der Ansprüche 1 bis 21, **dadurch gekennzeichnet, dass** der Kondenser einen ersten Kondenser (104) zum Auskondensieren von Wasser und einen zweiten, nachgeschalteten Kondenser (107) zum Auskondensieren von Lösungsmitteln mit niedrigerem Taupunkt als Wasser aufweist.

23. Apparatur nach einem der Ansprüche 1 bis 22, **dadurch gekennzeichnet, dass** ein Anschluss (140) zur Zufuhr eines Inertgases vorgesehen ist.

24. Apparatur nach Anspruch 23, **dadurch gekennzeichnet, dass** ein Gassensor (142) zur Messung der Gaszusammensetzung in der Apparatur, insbesondere zur Messung des Sauerstoffgehaltes vorgesehen ist.

## Claims

1. Apparatus for the treatment of particulate material, with a process chamber (16, 94) for the reception and treatment of the material, said process chamber having a bottom (18, 96) provided with passage orifices through which process air (21) can be introduced into the process chamber (16, 94), and with an outlet for the discharge of process air (21) from the process chamber (16, 94), wherein a device (60) for conditioning the process air (21) and for circulating the process air (21) in closed circuit is integrated into the apparatus (10, 90), the conditioning device (60) having at least one condenser (35; 104, 107) and one air heater (52), and wherein a filter arrangement (28) is provided in order to remove solids (130) from the process air (21) flowing out from the process chamber (16, 94), filters (30, 32, 33; 100, 101, 102) of the filter arrangement (28) being arranged, in terms of flow, upstream of the device (60) for conditioning the process air, wherein an annular chamber (24, 98) is arranged around the process chamber (16) and receives at least parts of the filter arrangement (28) and/or of the conditioning device (60).

2. Apparatus of claim 1, **characterized in that** a fan (48) for circulating the process air (21) is arranged under the bottom (18, 96).

3. Apparatus of claim 2, **characterized in that** the fan (48) is arranged, in terms of flow, between the condenser (35; 104, 107) and the air heater (52).

4. Apparatus of any one of claims 1 to 3, **characterized in that** at least one nozzle (20) is provided, by means of which a treatment medium (76) for the material can be sprayed into the process chamber (16, 94).

5. Apparatus of claim 4, **characterized in that** spray air for spraying the treatment medium (76) can be drawn off from the process air (21) and supplied to the nozzle (20) via a line (63).

6. Apparatus of claim 5, **characterized in that** a compressor (73) for compressing the spray air is provided.

7. Apparatus of claim 1, **characterized in that** the process chamber (16, 96) has an upright cylindrical wall (14) which is closed off by means of the bottom (18), **in that** an air heater (52) and the fan (48) are arranged under the bottom (18), and **in that** annular filters (32, 33; 100, 101, 102) and at least one following annular condenser (35) are arranged in an annular chamber (24, 98) around the wall (14).

8. Apparatus of any one of claims 1 to 7, **characterized in that**, at an upper outflow end, a cover (26, 123) is provided, which serves for deflecting the process air (21) into the device (60) for conditioning the process air.

9. Apparatus of claim 8, **characterized in that** a screen (30; 113) is arranged at the outflow end of the process chamber (16).

10. Apparatus of claim 9, **characterized in that** the screen is designed as a vibrating screen (30).

11. Apparatus of any one of claims 1 to 10, **characterized in that** a device (116) for the suction extraction of the solids (130) retained by the filter arrangement is present.

12. Apparatus of claim 11, **characterized in that** the suction extraction device (116) has a movable suction connection piece (126) which sucks away the solids (130) from the filters (100, 101) of the filter arrangement from time to time.

13. Apparatus of claim 12, **characterized in that**, in a filter arrangement with filters (100, 101) which are arranged in an annular chamber (38) present around the process chamber (94), the movable suction connection piece (120) is designed as a rotating suction connection piece (126).

14. Apparatus of any one of claims 11 to 13, **characterized in that** process air sucked away by the suction extraction device (116) can be returned to the apparatus (90) again after the suction-extracted solids (130) have been separated.

15. Apparatus of any one of claims 1 to 14, **characterized in that** a screen (113) is arranged at the outflow end of the process chamber (94), and **in that** a device (117) for blowing off material (132) hanging on the screen (113) is provided.

16. Apparatus of claim 15, **characterized in that** the blow-off device (117) is designed movably in order from time to time to blow off the material (132) hanging on the screen 113).

17. Apparatus of claims 15 or 16, **characterized in that** the blow-off device (117) has a blowing shoe (128) running over the screen (113).

18. Apparatus of any one of claims 11 to 17, **characterized in that** the device (116) for the suction extraction of the filters (100, 101) and the device (117) for blowing off the screen (113) are combined in such a way that the process air sucked away by the suction extraction device (116) can be supplied to the blow-off device (117).

19. Apparatus of claim 18, **characterized in that** a radially extending rotating combined blowing/suction shoe (118) is arranged above the process chamber (94).

20. Apparatus of claim 19, **characterized in that** the blowing/suction shoe (118) has a suction orifice, which issues in the region of the filters (100, 101), and, furthermore, has a blowing orifice which issues in the region of the screen (113).

21. Apparatus of claims 19 or 20, **characterized in that** a suction apparatus (134) is provided which is connected to the blowing/suction shoe (118).

22. Apparatus of any one of claims 1 to 21, **characterized in that** the condenser has a first condenser (104) for condensing out water and a second following condenser (107) for condensing out solvents having a lower dew point than water.

23. Apparatus of any one of claims 1 to 22, **characterized in that** a connection (140) for supplying an inert gas is provided

24. Apparatus of claim 23, **characterized in that** a gas sensor (142) for measuring the gas composition in the apparatus, in particular for measuring the oxygen content, is provided.

## Revendications

1. Appareil de traitement de matière sous forme de particules, comprenant une chambre de traitement (16, 94) destinée à recevoir et traiter la matière, qui comprend un fond (18, 96) pourvu d'orifices de passage, par lesquels de l'air de traitement (21) peut être introduit dans la chambre de traitement (16, 94), et comprenant une sortie destinée à évacuer de l'air de traitement (21) de la chambre de traitement (16, 94), un dispositif (60) destiné à conditionner l'air de traitement (21) et à faire circuler l'air de traitement (21) dans le circuit étant intégré dans l'appareil (10, 90), le dispositif (60) de conditionnement comprenant au moins un condenseur (35 ; 104, 107) et un réchauffeur d'air (52), et en ce qu'un dispositif de filtrage (28) est prévu afin d'éliminer des substances solides (130) de l'air de traitement (21) sortant de la chambre de traitement (16, 94), les filtres (30, 32, 33 ; 100, 101, 102) du dispositif de filtrage (28) étant disposés conformément à la technique des fluides en amont du dispositif (60) destiné à conditionner l'air de traitement, un espace annulaire (24, 98) étant disposé autour de la chambre de traitement (16), lequel espace reçoit au moins des parties du dispositif de filtrage (28) et/ou du dispositif (60) de conditionnement.

2. Appareil selon la revendication 1, **caractérisé en ce qu'**un ventilateur (48) destiné à faire circuler l'air de traitement (21) est disposé sous le fond (18, 96).

3. Appareil selon la revendication 2, **caractérisé en ce que** le ventilateur (48) est disposé conformément à la technique des fluides entre le condenseur (35 ; 104, 107) et le réchauffeur d'air (52).

4. Appareil selon l'une quelconque des revendications 1 à 3, **caractérisé en ce qu'**au moins une buse (20) est prévue, au moyen de laquelle un milieu de traitement (76) pour la matière peut être pulvérisé dans la chambre de traitement (16, 94).

5. Appareil selon la revendication 4, **caractérisé en ce que** de l'air de pulvérisation destiné à pulvériser le milieu de traitement (76) peut être prélevé de l'air de traitement (21) par l'intermédiaire d'une conduite (63) et amené à la buse (20).

6. Appareil selon la revendication 5, **caractérisé en ce qu'**il est prévu un compresseur (73) destiné à comprimer l'air de pulvérisation.

7. Appareil selon la revendication 1, **caractérisé en ce que** la chambre de traitement (16, 96) comprend une paroi cylindrique verticale (14), qui est fermée par le fond (18), **en ce qu'**un réchauffeur d'air (52) et le ventilateur (48) sont disposés sous le fond (18), et **en ce que** des filtres annulaires (32, 33 ; 100, 101, 102) et au moins un condenseur annulaire (35) placé en aval sont disposés dans un espace annulaire (24, 98) autour de la paroi (14).

8. Appareil selon l'une quelconque des revendications 1 à 7, **caractérisé en ce qu'**un couvercle (26, 123) est prévu sur une extrémité d'écoulement supérieure, lequel sert à dévier l'air de traitement (21) dans le dispositif (60) destiné à conditionner l'air de traitement.

9. Appareil selon la revendication 8, **caractérisé en ce qu'**un tamis (30 ; 113) est disposé sur l'extrémité d'évacuation de la chambre de traitement (16).

10. Appareil selon la revendication 9, **caractérisé en ce que** le tamis est conçu comme un tamis oscillant (30).

11. Appareil selon l'une quelconque des revendications 1 à 10, **caractérisé en ce qu'**un dispositif (116) destiné à aspirer les substances solides (130) retenues par le dispositif de filtrage est présent.

12. Appareil selon la revendication 11, **caractérisé en ce que** le dispositif (116) d'aspiration comprend une tubulure d'aspiration mobile (126), qui aspire de temps en temps les substances solides (130) des filtres (100, 101) du dispositif de filtrage.

13. Appareil selon la revendication 12, **caractérisé en ce que** dans le cas d'un dispositif de filtrage doté de filtres (100, 101) qui sont disposés dans un espace annulaire (38) présent autour de la chambre de traitement (94), la tubulure d'aspiration mobile (120) est conçue comme une tubulure d'aspiration circulaire (126).

14. Appareil selon l'une quelconque des revendications 11 à 13, **caractérisé en ce que** de l'air de traitement aspiré par le dispositif (116) d'aspiration, après la séparation des substances solides aspirées (130), peut à nouveau être ramené à l'appareil (90).

15. Appareil selon l'une quelconque des revendications 1 à 14, **caractérisé en ce qu'**un tamis (113) est disposé sur l'extrémité d'écoulement de la chambre de traitement (94), et **en ce qu'**il est prévu un dispositif (117) destiné à évacuer par soufflage la matière (132) suspendue au tamis (113).

16. Appareil selon la revendication 15, **caractérisé en ce que** le dispositif (117) destiné au soufflage est conçu de manière mobile, afin de souffler de temps en temps la matière (132) suspendue au tamis (113).

17. Appareil selon la revendication 15 ou 16, **caractérisé en ce que** le dispositif (117) d'évacuation par soufflage comprend un sabot de soufflage (128) circulant au-dessus du tamis (113).

18. Appareil selon l'une quelconque des revendications 11 à 17, **caractérisé en ce que** le dispositif (116) destiné à aspirer les filtres (100, 101) et le dispositif (117) destiné à nettoyer le tamis (113) par soufflage sont combinés de telle sorte que l'air de traitement aspiré par le dispositif (116) d'aspiration peut être amené au dispositif (117) d'évacuation par soufflage.

19. Appareil selon la revendication 18, **caractérisé en ce qu'**un sabot de soufflage/d'aspiration (118) combiné, rotatif, s'étendant radialement est disposé au-dessus de la chambre de traitement (94).

20. Appareil selon la revendication 19, **caractérisé en ce que** le sabot de soufflage/d'aspiration (118) présente un orifice d'aspiration qui débouche dans la zone des filtres (100, 101), et comprend en outre un orifice de soufflage qui débouche dans la zone du tamis (113).

21. Appareil selon la revendication 19 ou 20, **caractérisé en ce qu'**il est prévu un appareil d'aspiration (134) qui est relié au sabot de soufflage/d'aspiration (118).

22. Appareil selon l'une quelconque des revendications 1 à 21, **caractérisé en ce que** le condenseur comprend un premier condenseur (104) destiné à condenser de l'eau et un second condenseur (107) placé en aval destiné à condenser des solvants à plus faible point de rosée que l'eau.

23. Appareil selon l'une quelconque des revendications 1 à 22, **caractérisé en ce qu'**il est prévu un raccordement (140) destiné à amener un gaz inerte.

24. Appareil selon la revendication 23, **caractérisé en ce qu'**il est prévu un capteur de gaz (142) destiné à mesurer la composition du gaz dans l'appareil, en particulier à mesurer la teneur en oxygène.
